# EUROPÄISCHE PATENTSCHRIFT

(11) **EP 2 758 496 B1**
(45) Veröffentlichungstag und Bekanntmachung des Hinweises auf die Patenterteilung: **11.05.2022**
(21) Anmeldenummer: 12756178.5
(22) Anmeldetag: 05.09.2012
(51) Int. Cl.: C10K 1/00, C10J 3/10, C10K 1/10

(54) **VERFAHREN ZUR HERSTELLUNG VON SYNTHESEGAS DURCH VERGASUNG EINER BIOMASSE IN EINER WIRBELSCHICHT**
METHOD FOR PRODUCING SYNTHESIS GAS BY GASIFYING A BIOMASS IN A FLUIDIZED BED
PROCÉDÉ DE FABRICATION DE GAZ DE SYNTHÈSE PAR GAZÉIFICATION D'UNE BIOMASSE DANS UN LIT FLUIDISÉ

(30) Priorität: 19.09.2011 DE 102011114171
(43) Veröffentlichungstag der Anmeldung: 30.07.2014
(73) Patentinhaber: GIDARA Energy B.V., 2631 XD Nootdorp (NL)
(72) Erfinder: HEINRITZ-ADRIAN, Max, 48155 Münster (DE); ABRAHAM, Ralf, 59192 Bergkamen (DE); PAVONE, Domenico, 44797 Bochum (DE)
(74) Vertreter: Dentons Patent Solutions Rechtsanwaltsgesellschaft mbH
(86) Internationale Anmeldenummer: PCT/EP2012/067277
(87) Internationale Veröffentlichungsnummer: WO 2013/041372

(56) Entgegenhaltungen:
- WO-A1-00/43468
- WO-A1-03/029389
- US-A- 4 280 893
- US-A- 5 173 263
- US-A1- 2010 040 527
- None

## Beschreibung

Die Erfindung betrifft ein Verfahren zur Herstellung von Synthesegas durch Vergasung einer Biomasse in einer Wirbelschicht, wobei die Biomasse einem Wirbelschichtvergaser zugeführt wird. Zudem betrifft die Erfindung eine Anlage zur Durchführung des Verfahrens.

Aus der DE 10 2010 006 192 A1 ist ein gattungsgemäßes Verfahren bekannt, bei dem eine deutliche Verbesserung des Kohlenstoffumsatzes bei der Vergasung von Biomasse erreicht wird.

Aus der DE 10 2006 005 626 B4 ist die Konditionierung von Biomasse durch Zugabe eines alkalibindenden Tonminerals im Rahmen von Verfahren zur Wirbelschichtvergasung bekannt.

Im Zusammenhang mit Verfahren zur Herstellung von Synthesegas durch Vergasung einer Biomasse in einer Wirbelschicht bzw. im Zusammenhang mit Verfahren in Gegenwart von Gettermaterialien kann des Weiteren auf WO 00/43468, US 5,173,263, US 4,280,893, US 2010/040527 und WO 03/029389 verwiesen werden.

Ein Problem der vorbekannten Technologie zur Vergasung von Biomassen in einer Wirbelschicht ist der nicht geringe Alkaligehalt in der Biomasse. Diese Alkalien verdampfen nämlich bei Temperaturen ab 800° C bei der Vergasung und diffundieren teilweise in die Poren der Ausmauerung des Wirbelschichtvergasers. Durch die Einlagerung der Alkalien wird die Struktur der Ausmauerung zerstört. Dieses Phänomen ist als sogenanntes Alkalibursting bekannt. Ein weiterer Teil der bei der Vergasung einer Biomasse in einer Wirbelschicht entstehenden dampfförmigen Alkalien gelangt in einen dem Wirbelschichtvergaser nachgeschalteten, kälteren Anlagenbereich, in dem es zur Kondensation und Verstopfung sowie zur Verklebung und Zersetzung beispielsweise der Wärmetauscher und Warmgasfilter kommen kann.

Hier setzt die Erfindung an, deren Aufgabe darin besteht, die dampfförmigen Alkalien die in einem Verfahren zur Herstellung von Synthesegas durch Vergasung einer Biomasse in einer Wirbelschicht entstehen zu eliminieren.

Mit einem Verfahren der eingangs bezeichneten Art wird diese Aufgabe gemäß der Erfindung nach Anspruch 1 gelöst.

Vorteilhafte Ausgestaltungen der Erfindung ergeben sich aus den Unteransprüchen. Es hat sich gezeigt, dass eine signifikante Alkaliabscheidung erfolgt, wenn die Alkalien direkt in Kontakt mit Getterkeramiken bzw. Alkalibinder in Kontakt gebracht werden. In einer hier verwendeten Terminologie sind Getterkeramiken bzw. Alkalibinder Stoffe, die durch physikalische oder chemische Sorption Alkalien in ihrer Struktur einbinden können. Getterkeramiken sind also Alkalibinder. Somit können unerwünschte, im Rahmen der Vergasung einer Biomasse in einer Wirbelschicht entstehende Alkalidämpfe aus dem Produktgasstrom der Biomassevergasung eliminiert werden. Vergleichsrechnungen ergeben zudem, dass der Einsatz von Getterkeramiken für die Vermeidung des Alkalibursting sehr kostengünstig ist.

Als Getterkeramiken bzw. Alkalibinder eignen sich beispielsweise folgende Stoffe: **Kaolin, Bauxit, Bentonit, Attapulgit, Pyrophilit, Andasulit, Sillimantin, Mullit und Fullererde.**

Diese Alkalibinder bzw. Getterkeramiken können einzeln oder als Mischung eingesetzt werden.

Eine praktikable Variante der Erfindung sieht vor, dass die Getterkeramiken mit der Biomasse mit einer dem Wirbeischichtvergaser vorgeschalteten Vorrichtung in Kontakt gebracht werden. Vorgeschaltete Vorrichtungen sind beispielsweise ein Wiegebehälter, eine Eintragsschleuse oder ein Vorlagebehälter.

Vorzugsweise können die Getterkeramiken auch direkt in den Wirbelschichtvergaser geleitet und dort mit dem Synthesegas in Kontakt gebracht werden. Untersuchungen haben ergeben, dass in Anwesenheit von Wasserdampf die Einbindefähigkeit von Alkalien in die Getterkeramiken signifikant erhöht werden kann, da Wasserdampf die molekularen Netzwerke der Getterkeramiken derart auflockert, dass eine Einbindung, insbesondere von großen Alkalien, in den Zwischenräumen des Netzwerkes erleichtert wird.

Eine vorteilhafte Ausgestaltung der Erfindung sieht daher vor, dass in dem Synthesegas enthaltene dampfförmige Alkalien mit Wasserdampf in Kontakt gebracht werden.

Um den Alkaligehalt des Produktgases, d.h. des aus dem Wirbelschichtvergaser kommenden Synthesegases zu überprüfen sieht eine weitere vorteilhafte Ausgestaltung der Erfindung vor, dass das Synthesegas von einer dem Wirbelschichtvergaser nachgeschalteten Messsonde erfasst wird, die den Alkaligehalt messen kann. Um die Kosten der Zugabe der Getterkeramiken weiter signifikant zu reduzieren, ist im Rahmen der Erfindung auch eine diskontinuierliche Zugabe der Getterkeramiken gewährleistet. Hierzu ist es von Vorteil, dass die in einem dem Wirbelschichtvergaser nachgeschalteten Warmgasfilter sich ansammelnden Getterkeramiken in den Wirbelschichtvergaser zurückgeführt werden. Die Getterkeramiken werden dabei bis zur Sättigung in dem Warmgasfilter gemeinsam mit dem Staub separiert und im Kreislauf gefahren, d.h. zurück in den Vergaser geführt. Untersuchungen haben gezeigt, dass durch diese Art der diskontinuierlichen Zugabe der Getterkeramiken eine nicht unerhebliche Kosteneinsparung erzielt werden kann.

Schließlich sieht die Erfindung auch eine Anlage gemäß Anspruch 7 zur Durchführung des Verfahrens vor.

Weitere Vorteile, Merkmale und Einzelheiten der Erfindung ergeben sich aufgrund der nachfolgenden Beschreibung sowie anhand der Zeichnung. Diese zeigt in der einzigen Figur ein Anlagenschaltbild mit Prozessfluss zur Durchführung des erfindungsgemäßen Verfahrens.

Die allgemein mit 1 bezeichnete Anlage zur Vergasung einer Biomasse 2 in einer Wirbelschicht eines Wirbelschichtvergasers 3 wird im Wesentlichen von den nachfolgend beschriebenen Anlageelementen gebildet:
Eine Lagerungsvorrichtung 4 lagert die Biomasse 2. Über eine Schleuse, z.B. eine Zellenradschleuse 5, wird das zu verarbeitende Material zunächst einem Wiegebehälter 6, anschließend einer Eintragsschleuse 7 und schließlich einem Vorlagebehälter 8 zugeführt.

Das Material aus dem Vorlagebehälter 8 wird wiederum über eine Zellenradschleuse 9 und wenigstens eine Schnecke 10, in den dargestellten Ausführungsformen sind zwei Schnecken 10 dargestellt, dem Wirbelschichtvergaser 3 zugeführt und dort im Rahmen des Wirbelschichtverfahrens vergast. Die Biomasse 2 wird dabei in dem Wirbelschichtvergaser 3 zu einem mit Alkalien beladenen Synthesegas umgesetzt.

Das Synthesegas wird von den Alkalien befreit, indem sie in dem Wirbelschichtvergaser 3 mit Getterkeramiken 11 in Kontakt gebracht werden. Hierzu werden die Getterkeramiken 11 zunächst in einem Getterkeramiksilo 12 gespeichert und über eine Zuführleitung in Gestalt von steuerbaren Zellenradschleusen 13 sowie über eine weitere Zellenradschleuse 14 und Schnecke 15a, d.h. in das Eintragssystem des Wirbelschichtvergasers 3 und somit in den Wirbelschichtvergaser 3 geleitet.

Alternativ können die in dem Getterkeramiksilo 12 gespeicherten Getterkeramiken 11 über die Zellenradschleusen 13 den dem Wirbelschichtvergaser 3 vorgeschalteten Vorrichtungen, d.h. dem Wiegebehälter 6, der Eintragsschleuse 7 sowie dem Vorlagebehälter 8, zugeführt und somit in den Wirbelschichtvergaser 3 geleitet werden. Das alkalibefreite Synthesegas wird einem Rückführzyklon 14 zugeleitet, wodurch die Zirkulation der für das Wirbelbett geeigneten Feststoffpartikel zurück in den Wirbelschichtvergaser 3 gewährleistet ist. Von dem Rückführzyklon 14 wird das Synthesegas schließlich dem Rohgaskühler 15 und über den Warmgasfilter 16 der weiteren Verwendung zugeführt.

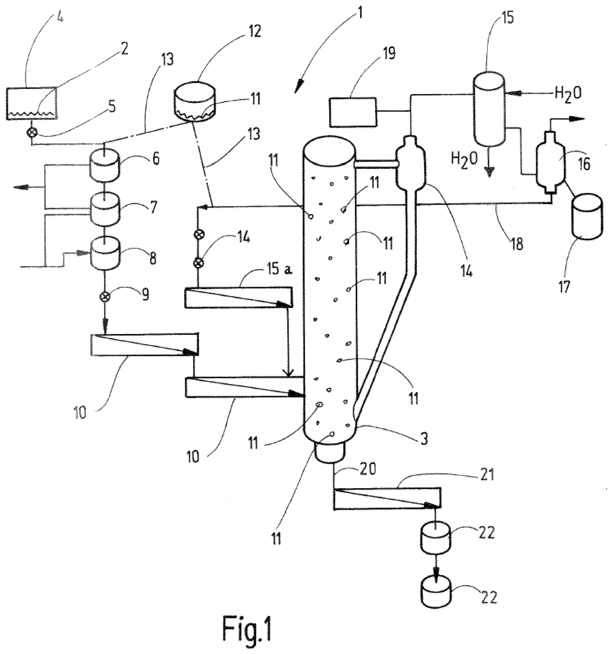

In der in Fig. 1 dargestellten Ausführungsform der erfindungsgemäßen Anlage und des erfindungsgemäßen Verfahrens ist hinter dem Warmgasfilter 16 ein Staubsilo zur Teilentnahme des Staubes angeordnet, das mit dem Bezugszeichen 17 versehen ist. Zwischen dem Warmgasfilter 16 und dem Eintragssystem führt eine Rückführleitung 18, durch die durch die Schwerkraft der Staub aus dem Warmgasfilter 16 dem Wirbelschichtvergaser 3 wieder zugeführt werden kann, wobei die Rückführleitung 18 in Form einer Schnecke vorliegen kann. Wesentlich ist auch, dass die Getterkeramiken 11 bis zur Sättigung in den Warmgasfilter 16 geführt werden können und dort mit den Methoden der Staubabscheidung gemeinsam mit dem Staub separiert und zurück über die Rückführleitung 18 in den Wirbelschichtvergaser 3 geführt werden können.

Zwischen dem Rückführzyklon 14 und dem Rohgaskühler 15 ist eine Messsonde 19 geschaltet, mit deren Hilfe der Alkaligehalt des Synthesegases und somit die Qualität des Synthesegases erfasst werden kann.

Mit dem Bezugszeichen 20 ist schließlich der Bodenaustrag aus dem Wirbelschichtvergaser 3 bezeichnet, wobei die dort anfallenden Produkte wiederum über eine Schnecke 21 entsprechenden Aufnahmen 22 zugeführt werden.

Natürlich ist die beschriebene Ausführungsform der Erfindung noch in vielfacher Hinsicht abzuändern, ohne den Umfang der Ansprüche zu verlassen, insbesondere was die Rückführung des Staubes bzw. der Getterkeramiken aus dem Warmgasfilter 16 angeht. In dem Warmgasfilter 16 können beispielsweise Kerzenfilter eingesetzt werden, um den Staub bzw. die Getterkeramiken 11 zu separieren. Auch existieren weitere Möglichkeiten, die Getterkeramiken 11 in den Wirbelschichtvergaser 3 zu transferieren. Beispielsweise können im Falle des Vorhandenseits einer Torrefizierung, oder von Pellets, die Getterkeramiken 11 der Torrefizierungsvorrichtung bzw. der Pelletpresse zugeführt werden.

### Bezugszeichenlisten:

- 1: Anlage
- 2: Biomasse
- 3: Wirbelschichtvergaser
- 4: Lagerungsvorrichtung
- 5: Zellenradschleuse
- 6: Wiegebehälter
- 7: Eintragsschleuse
- 8: Vorlagebehälter
- 9: Zellenradschleuse
- 10: Schnecke
- 11: Getterkeramiken
- 12: Getterkeramiksilo
- 13: Zellenradschleuse
- 14: Rückführzyklon
- 15: Rohgaskühler
- 15a: Schnecke
- 16: Warmgasfilter
- 17: Staubsilo
- 18: Rückführleitung
- 19: Messsonde
- 20: Bodenaustrag
- 21: Schnecke
- 22: Aufnahmen

## Patentansprüche

1. Verfahren zur Herstellung von Synthesegas durch Vergasung einer Biomasse (2) in einer Wirbelschicht, wobei die Biomasse (2) einem Wirbelschichtvergaser (3) zugeführt wird, **dadurch gekennzeichnet, dass**
- das Synthesegas mit alkalibindenden Getterkeramiken (11) eingerichtet zur Eliminierung dampfförmiger Alkalien in Kontakt gebracht wird,
- die Getterkeramiken (11) diskontinuierlich zugegeben werden, und
- die in einem dem Wirbelschichtvergaser (3) nachgeschalteten Warmgasfilter (16) sich ansammelnden Getterkeramiken (11) in den Wirbelschichtvergaser (3) zurückgeführt werden.

2. Verfahren nach Anspruch 1, **dadurch gekennzeichnet,**
- **dass** die Getterkeramiken (11) mit der Biomasse (2) mit einer dem Wirbelschichtvergaser (3) vorgeschalteten Vorrichtung (4,5,6) in Kontakt gebracht werden.

3. Verfahren nach Anspruch 1 oder 2, **dadurch gekennzeichnet,**
- **dass** die Getterkeramiken (11) in den Wirbelschichtvergaser (3) geleitet werden und mit dem Synthesegas in Kontakt kommen.

4. Verfahren nach einem der Ansprüche 1 bis 3, **dadurch gekennzeichnet,**
- **dass** die in dem Synthesegas enthaltenen dampfförmigen Alkalien mit Wasserdampf in Kontakt gebracht werden.

5. Verfahren nach einem der vorhergehenden Ansprüche, **dadurch gekennzeichnet,**
- **dass** das Synthesegas von einer dem Wirbelschichtvergaser (3) nachgeschalteten Messsonde (19) erfasst wird.

6. Verfahren nach einem der Ansprüche 2 bis 5, **dadurch gekennzeichnet,**
- **dass** die Zuführung der Getterkeramiken (11) in die vorgeschalteten Vorrichtungen (4,5,6) und/oder in den Wirbelschichtvergaser (3) gesteuert wird.

7. Anlage (1) zur Durchführung des Verfahrens gemäß einem der Ansprüche 1 bis 6, mit einem Wirbelschichtvergaser (3) vor- und nachgeschalteten Vorrichtungen (4,5,6), **dadurch gekennzeichnet, dass**
- Vorrichtung (4) eine Lagerungsvorrichtung für die Biomasse (2) ist, Vorrichtung (5) eine Zellenradschleuse ist und Vorrichtung (6) ein Wiegebehälter ist,
- sie ein Getterkeramiksilo (12) umfasst und eingerichtet ist zur Eliminierung dampfförmiger Alkalien mittels im Getterkeramiksilo (12) vorgesehenen Getterkeramiken (11),
- die Anlage (1) ausgebildet ist, die Getterkeramiken (11) diskontinuierlich zuzugeben, und
- in einem dem Wirbelschichtvergaser (3) nachgeschalteten Warmgasfilter (16) sich ansammelnde Getterkeramiken (11) über eine Rückführleitung (18) in den Wirbelschichtvergaser (3) zurückzuführen.

8. Anlage nach Anspruch 7, **dadurch gekennzeichnet,**
- **dass** sie eine Messsonde (19) aufweist, die dem Wirbelschichtvergaser (3) nachgeschaltet ist.

9. Anlage nach Anspruch 7 oder 8, **dadurch gekennzeichnet,**
- **dass** zwischen Getterkeramiksilo (12) und Wirbelschichtvergaser (3) und/oder zwischen Getterkeramiksilo (12) und dem Wirbelschichtvergaser (3) vorgeschalteten Vorrichtungen (4,5,6) zumindest eine Zuführleitung ausgebildet ist.

## Claims

1. Method for producing synthesis gas by gasifying a biomass (2) in a fluidized bed, the biomass (2) being supplied to a fluidized-bed gasifier (3), **characterized in that**
- the synthesis gas is brought into contact with alkali-binding getter ceramics (11) which are configured to eliminate vaporous alkalis,
- the getter ceramics (11) are added discontinuously, and
- the getter ceramics (11) accumulating in a hot gas filter (16) connected downstream of the fluidized-bed gasifier (3) are returned to the fluidized-bed gasifier (3).

2. Method according to claim 1, **characterized in that**
- the getter ceramics (11) are brought into contact with the biomass (2) with a device (4, 5, 6) connected upstream of the fluidized-bed gasifier (3).

3. Method according to either claim 1 or claim 2, **characterized in that**
- the getter ceramics (11) are fed into the fluidized-bed gasifier (3) and come into contact with the synthesis gas.

4. Method according to any of claims 1 to 3, **characterized in that**
- the vaporous alkalis contained in the synthesis gas are brought into contact with water vapor.

5. Method according to any of the preceding claims, **characterized in that**
- the synthesis gas is detected by a sensing probe (19) connected downstream of the fluidized-bed gasifier (3).

6. Method according to any of claims 2 to 5, **characterized in that**
- supplying the getter ceramics (11) into the upstream devices (4, 5, 6) and/or into the fluidized-bed gasifier (3) is controlled.

7. Plant (1) for carrying out the method according to any of claims 1 to 6, comprising devices (4, 5, 6) connected upstream and downstream of a fluidized-bed gasifier (3), **characterized in that**
- device (4) is a storage device for the biomass (2), device (5) is a rotary feeder and device (6) is a weighing container,
- said plant comprises a getter ceramics silo (12) and is configured to eliminate vaporous alkalis by means of getter ceramics (11) provided in the getter ceramics silo (12),
- the plant (1) is designed to add the getter ceramics (11) discontinuously, and
- getter ceramics (11) accumulating in a hot gas filter (16) connected downstream of the fluidized-bed gasifier (3) are returned to the fluidized-bed gasifier (3) via a return line (18).

8. Plant according to claim 7, **characterized in that**
- it has a sensing probe (19) which is connected downstream of the fluidized-bed gasifier (3).

9. Plant according to either claim 7 or claim 8, **characterized in that**
- at least one supply line is formed between the getter ceramics silo (12) and the fluidized-bed gasifier (3) and/or between the getter ceramics silo (12) and the devices (4, 5, 6) connected upstream of the fluidized-bed gasifier (3).

## Revendications

1. Procédé permettant la production de gaz de synthèse par gazéification d'une biomasse (2) dans un lit fluidisé, la biomasse (2) étant acheminée à un gazéificateur à lit fluidisé (3), **caractérisé en ce que**
- le gaz de synthèse est mis en contact avec des céramiques getter (11) se liant aux alcalis et permettant l'élimination d'alcalis sous forme de vapeur,
- les céramiques getter (11) sont ajoutées de manière discontinue, et
- les céramiques getter (11) accumulées dans un filtre à gaz chaud (16) disposé en aval du gazéificateur à lit fluidisé (3) sont renvoyées dans le gazéificateur à lit fluidisé (3).

2. Procédé selon la revendication 1, **caractérisé en ce**
- **que** les céramiques getter (11) sont mises en contact avec la biomasse (2) au moyen d'un dispositif (4, 5, 6) disposé en amont du gazéificateur à lit fluidisé (3).

3. Procédé selon la revendication 1 ou 2, **caractérisé en ce**
- **que** les céramiques getter (11) sont introduites dans le gazéificateur à lit fluidisé (3) et entrent en contact avec le gaz de synthèse.

4. Procédé selon l'une des revendications 1 à 3, **caractérisé en ce**
- **que** les alcalis sous forme de vapeur contenus dans le gaz de synthèse sont mis en contact avec de la vapeur d'eau.

5. Procédé selon l'une des revendications précédentes, **caractérisé en ce**
- **que** le gaz de synthèse est détecté par une sonde de mesure (19) disposée en aval du gazéificateur à lit fluidisé (3).

6. Procédé selon l'une des revendications 2 à 5, **caractérisé en ce**
- **que** l'alimentation des céramiques getter (11) dans les dispositifs (4, 5, 6) disposés en amont et/ou dans le gazéificateur à lit fluidisé (3) est régulée.

7. Système (1) permettant la mise en œuvre du procédé selon l'une des revendications 1 à 6, comportant un gazéificateur à lit fluidisé (3) et des dispositifs (4, 5, 6) disposés en amont et en aval, **caractérisé en ce que**
- un dispositif (4) est un dispositif de stockage pour la biomasse (2), un dispositif (5) est une vanne à roue cellulaire et un dispositif (6) est un récipient de pesage,
- le système comprend un silo en céramiques getter (12) et est conçu pour éliminer des alcalis sous forme de vapeur au moyen de céramiques getter (11) prévues dans le silo en céramiques getter (12),
- le système (1) est conçu pour alimenter les céramiques getter (11) de manière discontinue, et
- des céramiques getter (11) accumulées dans un filtre à gaz chaud (16) disposé en aval du gazéificateur à lit fluidisé (3) sont renvoyées dans le gazéificateur à lit fluidisé (3) par l'intermédiaire d'une conduite de retour (18).

8. Système selon la revendication 7, **caractérisé en ce**
- **qu'**il présente une sonde de mesure (19) disposée en aval du gazéificateur à lit fluidisé (3).

9. Système selon la revendication 7 ou 8, **caractérisé en ce**
- **qu'**au moins une conduite d'alimentation est formée entre le silo en céramiques getter (12) et le gazéificateur à lit fluidisé (3) et/ou entre le silo en céramiques getter (12) et les dispositifs (4, 5, 6) disposés en amont du gazéificateur à lit fluidisé (3).
